(19) Europäisches Patentamt
European Patent Office
Office européen des brevets

(11) **EP 2 104 292 A1**

(12) **EUROPEAN PATENT APPLICATION**

(43) Date of publication:
**23.09.2009 Bulletin 2009/39**

(51) Int Cl.:
***H04L 25/03*** *(2006.01)*

(21) Application number: **08153091.7**

(22) Date of filing: **20.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Pantech Co., Ltd.**
**Seoul 121-270 (KR)**

(72) Inventors:
• **Sung, Dan Keun**
**305-707, Daejeon (KR)**

• **Jung, Bang Chul**
**110-033, Seoul (KR)**
• **Jin, Hu**
**Daejeon (KR)**
• **Hwang, Ho Young**
**133-070, Seoul (KR)**

(74) Representative: **Bohest AG**
**Postfach 160**
**4003 Basel (CH)**

(54) **Method for transmitting and receiving data in multiple-input multiple-output wireless local area network environment, and a system and apparatus for performing the method**

(57) A multiple-input multiple-output (MIMO) wireless local area network (WLAN) system includes a method for transmitting and receiving data using a MIMO decoding scheme. A method for receiving data includes receiving a preamble from one or more stations via a plurality of receiving antennas, estimating a wireless channel between the station and an access point based on the received preambles, detecting a collision associated with each station based on the received preambles, and decoding the data by referring to a wireless channel estimate if the collision is detected.

FIG. 1

**Description**

BACKGROUND OF THE INVENTION

Field of the Invention

The present invention relates to a multiple-input multiple-output (MIMO) wireless local area network (WLAN), and more particularly, to a method for transmitting and receiving data in a MIMO WLAN that can reduce data loss due to collision between stations.

DISCUSSION OF THE BACKGROUND

A WLAN is a wireless short-distance communication network. The WLAN can maintain the readiness and extensibility of a wired LAN, but may not require a cabled connection and therefore can prevent cost increases, and can also provide a user with a more convenient network access environment.

Currently, various types of portable devices are widely used, and may include a personal digital assistant (PDA), a portable media player (PMP), and a laptop-type personal computer (PC). Also widely used is a desktop PC. Users' interests in the WLAN are rapidly increasing as the demand for network connectivity with such devices continues to increase.

The Institute of Electrical and Electronics Engineers (IEEE) 802.11 Wireless Fidelity (Wi-Fi) standard has been associated with WLAN. Since the IEEE 802.11 standard was initially released in 1997, the IEEE 802.11 standard has been the base of various extensions such as 802.11a, 802.11b, and 802.11g. The standardization of IEEE 802.11n is currently in progress in order to support higher WLAN performance.

The IEEE 802.11n standard may adopt a system configuration of an MIMO scheme to support a high data transmission rate in a physical layer. In the MIMO scheme, a transmitting end, such as a station, transmits data via a plurality of transmitting antennas, passing through various types of paths, and a receiving end, such as an access point, detects the data in a signal that is received from each path via a plurality of receiving antennas. Through this, the MIMO scheme can improve a data transmission rate and reduce interference in a multi-path environment.

Therefore, in an IEEE 802.11n WLAN environment, the station and/or the access point may include a plurality of antennas. Through the above configuration, it is possible to support an improved data transmission rate in the physical layer. However, despite the performance improvement in the physical layer, there are some constraints on improving the entire data transmission throughput due to the limitation of a Media Access Control (MAC) protocol.

An IEEE 802.11 MAC protocol adopts a contention-based Distributed Coordinate Function (DCF) scheme for readiness design and configuration, and for sharing of wireless resources. According to the DCF scheme, stations that wish to transmit data to an access point first detect or consider a data transmission state of the WLAN prior to transmitting a data frame. If data transmission by another station is detected, the station wishing to transmit identifies the channel state as busy and postpones the transmission. After a time elapses, where the time may be based on the success or failure of the existing data frame transmission, a new channel contention is performed. If the channel is in an idle state, the station will wait for frame transmission during a backoff time that is randomly selected within a predetermined backoff window range. Through this procedure, many stations can share radio resources of a WLAN. The above-described collision avoidance scheme applied to the DCF scheme refers to a Carrier Sense Multiple Access with Collision Avoidance (CSMA/CA) scheme.

In the above-described DCF scheme, since the backoff time is randomly selected, more than one station should not transmit a data frame in the same time slot as another station and thus collision may be reduced between the stations. However, if the backoff time of more than one station is terminated in the same time slot and two or more stations start data frame transmission in the same time slot, the collision may occur between the stations. Thus, data transmitted from these stations may be overlappingly received at the access point, and the access point may not decode each station's individual data frame. Accordingly, in this case, the stations may not receive an acknowledge signal from the access point and each station needs to be reallocated with another backoff time and wait for a corresponding period of time to elapse before retransmitting the data frames.

If a small number of stations are covered by a single access point, the collision probability may be relatively low. Therefore, the performance deterioration according to the frame retransmission may be insignificant. However, if many stations are covered by the single access point, the collision probability increases and the data transmission throughput may deteriorate significantly.

Accordingly, there is a need for a new technology that can solve the collision problem by applying an MIMO technology in a MAC layer.

SUMMARY OF THE INVENTION

This invention provides a MAC protocol that may be used with MIMO technology.

This invention also provides a method for transmitting data using an MIMO decoding scheme if a collision occurs between a plurality of stations.

This invention also provides a method for receiving data using an MIMO decoding scheme if a collision occurs between a plurality of stations.

This invention also provides a system for transmitting and receiving data using an MIMO decoding scheme if a collision occurs between a plurality of stations.

This invention also provides an apparatus for transmitting data using an MIMO decoding scheme if a collision occurs between a plurality of stations.

This invention also provides an apparatus for receiving data using an MIMO decoding scheme if a collision occurs between a plurality of stations.

Additional features of the invention will be set forth in the description which follows, and in part will be apparent from the description, or may be learned by practice of the invention.

The present invention discloses a method for receiving data transmitted from a first station to an access point in a MIMO WLAN system. The method includes receiving a first preamble from the first station via a plurality of receiving antennas, measuring a channel coefficient between the first station and the access point based on the first preamble, detecting a collision between the first station corresponding to the first preamble and a second station corresponding to a second preamble, and constructing a channel vector using the channel coefficient if the collision is detected, and decoding data transmitted from the first station and the second station using the channel vector.

The present invention also discloses a method for transmitting data from a first station to an access point in a MIMO WLAN system. The method includes monitoring a system carrier to detect a data transmission state of the system, waiting for data transmission during a backoff time if data transmission from a second station to the access point is detected, and transmitting a data frame to the access point via a plurality of transmitting antennas, the data frame including a preamble associated with the first station, and the preamble including an orthogonal code or a pseudo-noise code. Further, the monitoring, receiving, and transmitting are repeated if an acknowledgement signal is not received from the access point within a predetermined period of time.

The present invention also discloses a MIMO WLAN system. The system includes an access point including a plurality of receiving antennas, a first station including a plurality of transmitting antennas, the first station to transmit data to the access point, and a second station including a plurality of transmitting antennas, the second station to transmit data to the access point. If data transmission from the second station is detected using a system carrier, the first station is in a standby state during a first backoff time after a short interframe Space (SIFS), an acknowledgement (ACK), a Distributed Coordinate Function (DCF) interframe space (DIFS), or an extended interframe space (EISF) time has elapsed, and thereafter the first station transmits a first data frame that includes a first preamble associated with the first station. If a collision is detected via the first preamble and a second preamble respectively received from the first station and the second station, the access point decodes the first data frame and a second data frame using a channel coefficient. Further, the first data frame and the second data frame are transmitted from the first station and the second station, and the channel coefficient is measured based on the first preamble and the second preamble.

The present invention also discloses an access point apparatus for a MIMO WLAN system. The access point apparatus includes a radio signal processing unit to receive a first data signal from a first station, a preamble extractor to extract a first preamble from the first data signal, the first preamble corresponding to the first station, a channel estimator to estimate a channel associated with the first station based on the first preamble, and to obtain a channel estimate, a collision detector to detect a collision between the first station and a second station based on the first preamble and a second preamble in a second data signal from the second station, and a frame detector to collectively or sequentially decode the first data signal based on the obtained channel estimate if the collision is detected, and to detect a first data frame of the first station.

It is to be understood that both the foregoing general description and the following detailed description are exemplary and explanatory and are intended to provide further explanation of the invention as claimed.

BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 illustrates a configuration of an MIMO WLAN system according to an exemplary embodiment of the present invention.

FIG. 2 is a timing diagram illustrating data transmission according to an exemplary embodiment of the present invention.

FIG. 3 is a flowchart illustrating a method for receiving data according to an exemplary embodiment of the present invention.

FIG. 4 is a flowchart illustrating a method for transmitting data according to an exemplary embodiment of the present invention.

FIG. 5 is a block diagram illustrating an access point according to an exemplary embodiment of the present invention.

FIG. 6 is a block diagram illustrating a frame detector of the access point shown in FIG. 5.

FIG. 7 is a block diagram illustrating a data signal estimator of the frame detector shown in FIG. 6.

FIG. 8A and FIG. 8B are graphs illustrating the simulation test result in an error-free environment.

FIG. 9A and FIG. 9B are graphs illustrating the simulation test result showing the throughput and mean access delay time where constant error exists.

FIG. 10A and FIG. 10B are graphs illustrating the simulation test result if an error rate changes.

DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

Hereinafter, a method for transmitting and/or receiving data according to exemplary embodiments of the present invention and an MIMO WLAN system and apparatus to perform the method will be described with reference to the accompanying drawings. The method will be described based on a data transmitting/receiving protocol of a Distributed Coordinate Function (DCF) scheme as defined in an IEEE 802.11 standard. Accordingly, aspects not described herein may be interpreted as being the same or substantially similar as those defined in the IEEE 802.11 DCF scheme. Descriptions of the present specification that differ from the IEEE 802.11 WLAN standard will follow the descriptions herein.

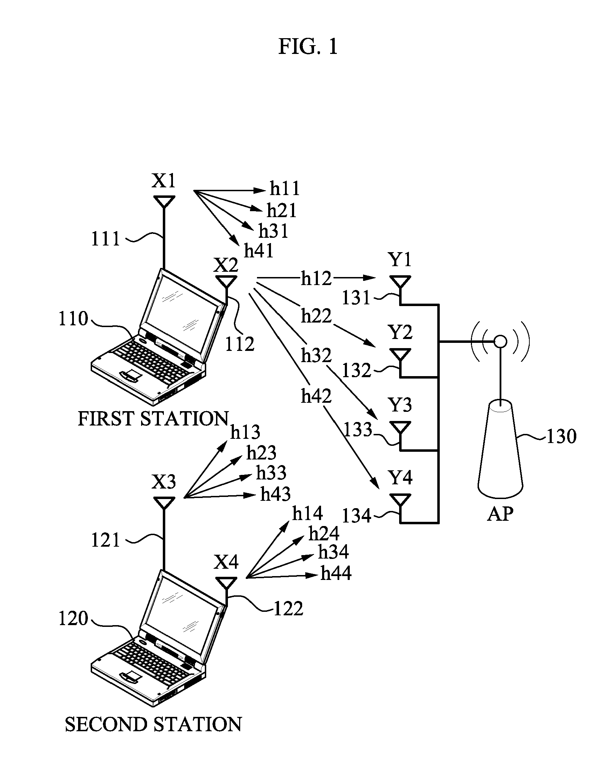

FIG. 1 illustrates a configuration of a MIMO WLAN system according to an exemplary embodiment of the present invention. Referring to FIG. 1, the MIMO WLAN system includes a first station 110 to transmit data, a second station 120 to transmit data, and an access point (AP) 130 that receives data from the first station 110 and data from the second station 120.

Contrary to the general WLAN system, the MIMO WLAN system includes the first station 110 including a plurality of transmitting antennas 111 and 112, the second station 120 including a plurality of transmitting antennas 121 and 122, and the AP 130 including a plurality of receiving antennas 131, 132, 133, and 134. The first station 110 may transmit data as signals via the transmitting antennas 111 and 112 through different paths, and the second station 120 may transmit data as signals via the transmitting antennas 121 and 122 through different paths. The AP 130 may receive signals transmitted through different paths via the receiving antennas 131, 132, 133, and 134.

In the WLAN system according to an exemplary embodiment of the present invention, the first station 110 and the second station 120 transmit data according to a DCF scheme. The following description will be provided for the first station 110, but the procedures will be equivalent or substantially similar for the second station 120.

Prior to transmitting a data frame, the first station 110 detects a data transmission state of the system using a carrier used for transmitting/receiving data in the WLAN system. If data transmission from another station to the AP 130 is detected, the first station 110 terminates or delays data transmission and returns to an idle state. After a DCF interframe space (DIFS) or extended interframe space (EIFS) time has elapsed, the first station 110 waits a predetermined backoff time and then transmits the data frame. In this instance, the data frame to be transmitted includes a preamble associated with the first station 110 for collision detection at the AP 130.

The AP 130 extracts the preamble from a radio signal that is received from the first station 110, and estimates a channel associated with the first station 110 based on the extracted preamble.

Also, the extracted preamble is used for collision detection. Thus, the first station 110 and the second station 120 may both wait a predetermined backoff time and then transmit the data frames. The data frame of the first station 110 includes a preamble associated with the first station 110, and the data frame of the second station 120 includes a preamble associated with the second station 120 for collision detection at the AP 130. When a preamble associated with the first station 110 and a preamble associated with the second station 120 are received in the same time slot, the AP 130 detects that the first station 110 and the second station 120 simultaneously transmitted the data frames, and detects the event as collision. Although not described, the collision may also include additional preambles respectively associated with additional stations that are received in the same time slot. If the collision is detected, the AP 130 may decode the data frames transmitted from each of the first station 110 and the second station 120 by referring to an estimated channel value.

In order to decode the data frames from the radio signals that are simultaneously received from the first station 110 and the second station 120, the AP 130 may use a MIMO decoding scheme. Examples of the MIMO decoding scheme may include a zero-forcing (ZF) scheme, a minimum mean-square error (MMSE) scheme, a maximum likelihood (ML) scheme, and a Successive Interference Cancellation (CIS).

Hereinafter, a method for simultaneously receiving data frames from the first station 110 and the second station 120 will be described in detail. As shown in FIG. 1, signals are transmitted to the AP 130 via two transmitting antennas 111 and 112 of the first station 110 and two transmitting antennas 121 and 122 of the second station 120, which may be respectively labeled as $X_1$, $X_2$, $X_3$, and $X_4$. A wireless channel between each of the transmitting antennas 111, 112, 121, and 122, and each of the receiving antennas 131, 132, 133, and 134 may be expressed as channel vector H shown below in Equation 1, which, according to this exemplary embodiment, includes sixteen channel coefficients $h_{11}$ through $h_{44}$. Received signals $Y_1$, $Y_2$, $Y_3$, and $Y_4$ received via the receiving antennas 131, 132, 133, and 134 are represented as Equation 1 below.

[Equation 1]

$$\begin{bmatrix} Y_1 \\ Y_2 \\ Y_3 \\ Y_4 \end{bmatrix} \square \begin{bmatrix} h_{11} & h_{12} & h_{13} & h_{14} \\ h_{21} & h_{22} & h_{23} & h_{24} \\ h_{31} & h_{32} & h_{33} & h_{34} \\ h_{41} & h_{42} & h_{43} & h_{44} \end{bmatrix} \square \begin{bmatrix} X_1 \\ X_2 \\ X_3 \\ X_4 \end{bmatrix}.$$

The channel coefficients $h_{11}$ through $h_{44}$ constituting the channel vector H are independent variables and thus may be individually measured. Each channel coefficient $h_{11}$ through $h_{44}$ may be measured based on pilot signals that are transmitted from the transmitting antennas 111, 112, 121, and 122 to the receiving antennas 131, 132, 133, and 134, respectively.

If the channel response associated with the first station 110 and the second station 120 is estimated as the channel vector H, the AP 130 may obtain the signals $X_1$, $X_2$, $X_3$, and $X_4$ by multiplying received signal matrix Y by an inverse matrix of the channel vector H. The received signal matrix Y includes the received signals $Y_1$, $Y_2$, $Y_3$, and $Y_4$. When m total transmitting antennas are included in a plurality of stations and n total receiving antennas are included in an AP, the channel vector H is an n x m matrix. Accordingly, if the channel vector H is not represented as a square matrix where m = n, the inverse matrix of the channel vector H may not be obtained. However, in this case, if using a pseudo-inverse matrix, it is possible to obtain a transmit signal from a received signal and a channel vector.

As described above, if AP 130 successfully obtains the signals $X_1$, $X_2$, $X_3$, and $X_4$ so that data decoding succeeds despite a collision between data frames of the first station 110 and the second station 120, the AP 130 transmits an acknowledge signal (hereinafter, referred to as "ACK") to the first station 110 and the second station 120. Generally, the ACK may consist of a frame with a short length. A configuration of the ACK will be later described in detail.

The ACK is a feedback signal to inform the first station 110 and the second station 120 that the data frames transmitted from the first station 110 and the second station 120 have been normally received at the AP 130. If the ACK is not received by the first station 110 and the second station 120 from the AP 130 within a predetermined period of time after transmitting the data frames, the first station 110 and the second station 120 may be reassigned with backoff time for retransmission of the data frames and may then wait for the backoff time to elapse. When the backoff time has elapsed, the first station 110 and the second station 120 retransmit the data frames. The operation associated with reception of the ACK is based on the general DCF scheme.

Referring to FIG. 1, each station includes a plurality of antennas according to a MIMO scheme. However, it will be apparent that the present invention may be applicable even if one or more of the colliding stations includes a single antenna.

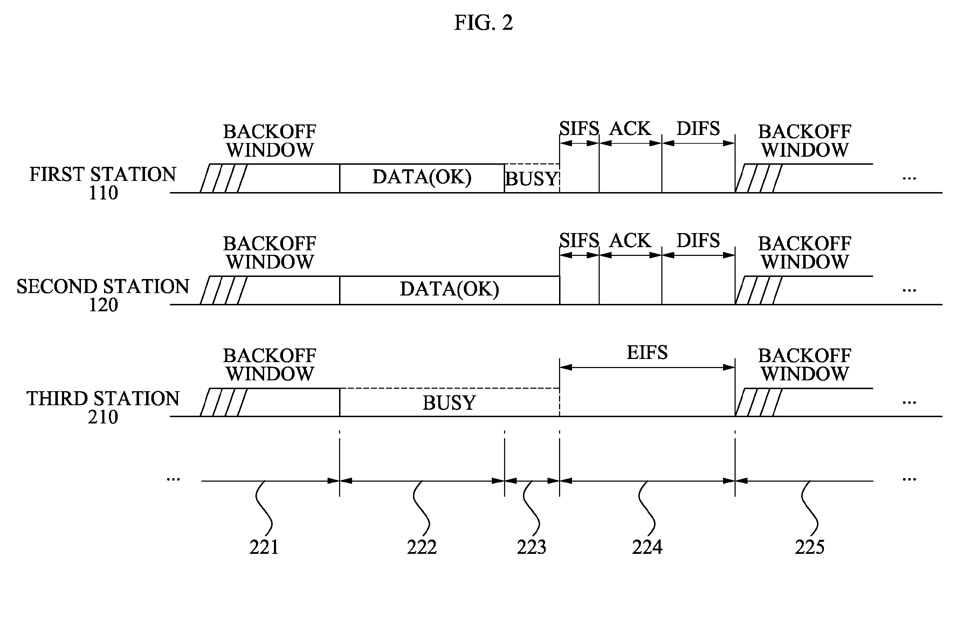

FIG. 2 is a timing diagram illustrating data transmission according to an exemplary embodiment of the present invention. Referring to FIG. 2, a third station 210 is included in the WLAN system in addition to the first station 110 and the second station 120, and transmits data according to a DCF scheme.

Also, in FIG. 2, backoff time 221 of the first station 110 and the second station 120 is terminated simultaneously. Therefore, the first station 110 and the second station 120 both begin to transmit a data frame in the same time duration 222. Also, the third station 210 detects a carrier after the first station 110 and the second station 120 begin data transmission, and detects that the channel is busy.

Referring to FIG. 2, the first station 110 terminates the data frame transmission earlier than the second station 120. Accordingly, in another time duration 223, the second station 120 continues to transmit the data frame, whereas the first station 110 detects the data transmission from the second station 120 and waits for an ACK with respect to its own data frame.

When the data frame transmission during time durations 222 and 223 is completed, the first station 110 and the second station 120 wait to receive an ACK from an AP 130 during a period of time after a short interframe space (SIFS) time has elapsed. Referring to FIG. 2, assuming that the simultaneously transmitted data frames are both received at the AP 130 and are successfully decoded by the AP 130, both the first station 110 and the second station 120 receive an ACK. The first station 110 and the second station 120 each receive an ACK and wait for a DIFS time prior to a backoff time in a subsequent time duration 225. Also, until the SIFS time, ACK waiting time, and the DIFS time have elapsed with respect to the first station 110 and the second station 120, the third station 210 waits for a corresponding extended interframe space (EIFS) time to elapse during the time duration 224.

According to a conventional contention-based DCF scheme adopting a technology different from a MIMO technology in a MAC layer, data frames that are simultaneously transmitted from the first station 110 and the second station 120 in the time durations 222 and 223 are not normally received and decoded at the AP 130. Accordingly, the first station 110 and the second station 120 would not receive an ACK from the AP 130, and the first station 110 and the second station 120 would wait until a predetermined backoff time has elapsed and before transmitting the data frames again.

To the contrary, according to the present invention, the MIMO decoding technology may be used. Accordingly, even if a collision occurs between the first station 110 and the second station 120, the MIMO decoding technology may decode the data frames transmitted from the first station 110 and the second station 120 based on a received signal. Thus it is possible to prevent or reduce the throughput deterioration due to the data frame retransmission.

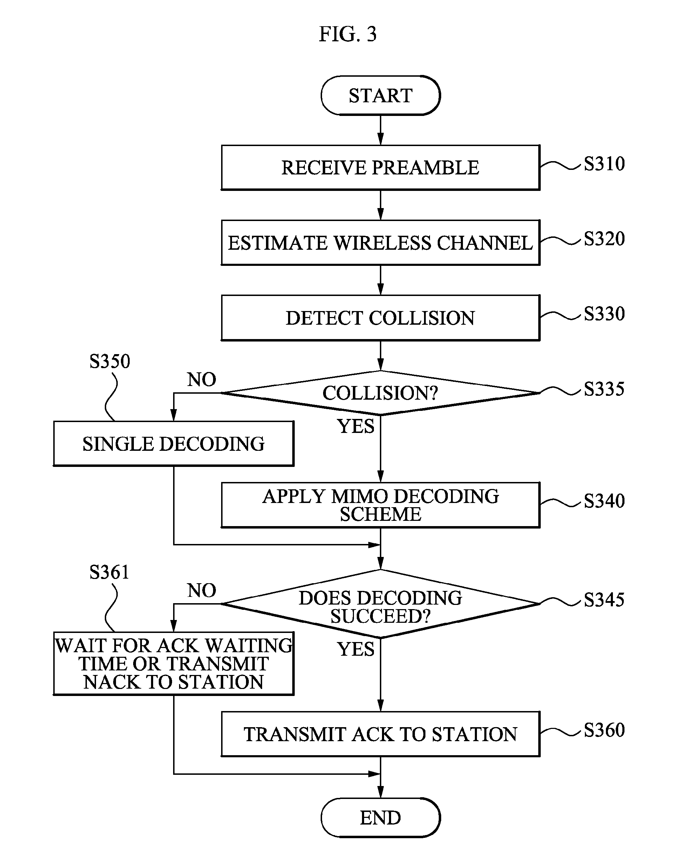

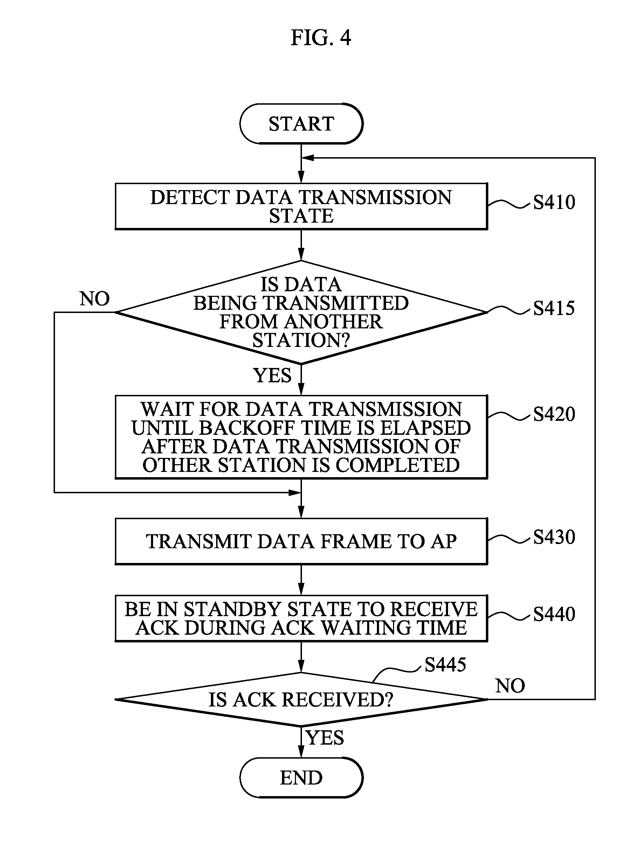

FIG. 3 is a flowchart illustrating a method for receiving data according to an exemplary embodiment of the present invention, and FIG. 4 is a flowchart illustrating a method for transmitting data according to an exemplary embodiment of the present invention.

First, FIG. 3 illustrating a method for receiving data transmitted from at least one station will be described.

In operation S310, the AP receives a preamble from at least one station. Operation S310 may include detailed operations for extracting the preamble from a radio signal that is received via a plurality of antennas.

More specifically, operation S310 may include receiving a radio signal that is transmitted from each station, correlating the received radio signal with predetermined preamble codes to calculate a correlation value, and extracting, as the preamble, a preamble code used for correlation if the calculated correlation value is greater than a predetermined threshold.

The preamble that is individually assigned to each station may be located in the head of, for example, a data frame to be transmitted. The preamble may include orthogonal code having a predetermined length, or a pseudo-noise (PN) code that is similar to a PN code used in a mobile communication system of a code division multiple access (CDMA) scheme. By including the orthogonal code or the PN code in the preamble, it is possible to extract overlapping preambles that are received at the AP.

Also, a different preamble may be allocated to each station at all times, so that the AP may definitely detect the collision between stations. Specifically, the preamble may include a code pattern unique to each station. However, a relatively large preamble code pool may be maintained if a number of stations to be located within the communication coverage of the AP is not known in advance. Accordingly, the size of the preamble code pool that includes preambles to be assigned to the stations may be reasonably determined based on various parameters associated with the WLAN system.

According to an exemplary embodiment of the present invention, each station may randomly select a code from the preamble code pool. The selected code may be included in the preamble and transmitted together when a data frame is transmitted.

According to another exemplary embodiment of the present invention, the preamble code pool may be maintained and managed by the AP. The AP may select a code from the preamble codes included in the preamble code pool, and individually allocate the selected code to a station located within the communication coverage of the AP.

According to still another exemplary embodiment of the present invention, the preamble may be allocated from the AP at the time when a station performs association on the AP.

In operation S320, the AP estimates a wireless channel between at least one station and the AP based on the preamble received from that station. Specifically, in operation S320, the AP may estimate the wireless channel based on a pilot signal transmitted from a station. To do so, the AP compares a received pilot signal with a known pattern, and estimates channel response based on the difference thereof. Thus, to eliminate an effect of noise, the AP may receive the pilot signal multiple times, or may continuously receive the pilot signal during a predetermined period of time. Further disclosure of various methods for estimating a wireless channel in an orthogonal frequency division multiple access (OFDMA)-based wireless terminal, which may be similarly applicable in a WLAN according to an exemplary embodiment of the present invention, are disclosed in co-pending U.S. Patent Application No. 11/694,243, the disclosure of which is hereby incorporated by reference for all purposes.

In operation S330, the AP detects the collision associated with that station based on the preamble received from that station. Specifically, in operation S330, when preambles are received in the same time slot, it is possible to detect that the collision occurred between stations corresponding to the received preambles.

As described above, the preamble allocated to each station may be an orthogonal code or a PN code, and thus the AP may receive the overlapping preambles. Accordingly, when N preambles are received in operation S310, this indicates that at least N stations simultaneously transmitted the data frames in a time slot. In operation S335, if N is greater than one, the collision may be detected.

If the collision is detected in operation S335, the AP applies a MIMO decoding scheme to the signal received from each station by referring to a wireless channel estimate in operation S340. For example, the AP decodes the data frame transmitted from each station by applying a ZF scheme, an MMSE scheme, or an ML scheme to the received signal.

Also, an SIC scheme may be applicable. In this case, the SIC scheme sequentially and repeatedly decodes a data frame received via a channel with the best channel response among a plurality of channels, estimates a received signal corresponding to the decoded data frame, and then eliminates the estimated signal in the entire radio signal. Through this, all the data frames may be sequentially decoded one by one from the data frame associated with the best channel.

Conversely, if the collision is undetected in operation S335, the AP extracts a data frame using a single decoding scheme in operation S350, without applying the MIMO decoding scheme in operation S340. Specifically, if there is no collision, the AP assumes that the data frame was transmitted from a single station, just as in the general DCF environment.

If the decoding succeeds through the above described operations in operation S345, the AP transmits the ACK to the station that transmitted the data frame in operation S360. According to the exemplary embodiments of the present invention, it is possible to successfully decode data regardless of whether the collision occurs. Accordingly, the ACK may include information associated with the collision detection. For example, the ACK may include a field including one or more bits to indicate the presence or absence, i.e. the detection, of a collision.

Also, if the collision is detected and decoding succeeds, the ACK may be transmitted to stations with colliding signals. Therefore, the ACK may include an identifier associated with each station. The preamble used for detecting the collision in operation 5330 is assigned to each station and thus it is possible to identify the station using the preamble. Similarly, each station may verify that the transmitted data frame is normally received at the AP by receiving the ACK that includes an index of the preamble associated with the station. Specifically, the ACK may include the index of the received preamble as an identifier.

Conversely, if decoding fails in operation S345, the AP may not transmit any feedback to the station during the ACK waiting time, or may transmit a negative ACK (NACK) within the ACK waiting time in operation S361. In the latter situation, the NACK also may include an identifier associated with each station, just like described above with respect to the ACK.

In another exemplary embodiment, decoding in operation S345 may succeed for one or more stations, but may fail for one or more stations. In this instance, the AP may transmit an ACK including an identifier associated with each station for which decoding was successful, and may transmit no feedback or a NACK including an identifier associated with each station for which decoding was unsuccessful.

The MIMO WLAN environment adopting the data receiving method according to an exemplary embodiment of the present invention uses a MAC protocol of a DCF scheme. Accordingly, if stations do not receive the ACK from the AP within the ACK waiting time, the stations are reassigned with a predetermined backoff time in order to retransmit the data frames.

FIG. 4 is a flowchart illustrating a method for transmitting a data frame from a station to an AP in a MIMO WLAN system according to an exemplary embodiment of the present invention.

In operation S410, a station detects a data transmission state of the WLAN system by monitoring a carrier used for transmitting and receiving data in the WLAN system. Prior to transmitting the data frame, in operation S415, a station may verify whether an encoded signal is being transmitted from another station to the AP through activity in the carrier.

If data transmission from another station is detected in operation S415, the station waits for data transmission until a predetermined backoff time has elapsed according to the DCF scheme in operation S420.

In operation S420, if the data transmission of the other station is detected, a station remains in a standby state until the new backoff time has elapsed after the data transmission of another station is complete. If the new backoff time has elapsed, data transmission may be performed. In operation S430, the station transmits the data frame to the AP via one or more transmitting antennas. The data frame includes a preamble associated with the station.

As described above, the preamble transmitted in the data frame may include a PN code or an orthogonal code associated with the station that transmits the data frame. The preamble functions to identify the corresponding station and is also used to estimate and detect the collision at the AP. The preamble may be randomly selected by each station from preambles included in a preamble code pool. As described above, the preamble code pool may be generally maintained and managed by the AP. Alternatively, the preamble may be allocated from the AP to a station at a time when the station performs association on the AP. Selecting or allocating of the preamble may be performed prior to operation S410.

In operation S440, the station that transmits the first data frame is in a standby state to receive an ACK from the AP during the ACK waiting time. If the ACK is received within the ACK waiting time in operation S445, thus acknowledging that the first data frame was received and successfully decoded, operation S410 may be performed for transmitting a subsequent or second data frame. Conversely, if the ACK is not received, operations S410 through S440 may be performed again for retransmitting the first data frame.

The backoff time may be randomly selected within a predetermined range for the size of backoff window. The size of the backoff window may be adaptively adjusted according to the collision occurrence frequency. For example, if an ACK is not received until the ACK waiting time has elapsed, it is possible to determine a statistically better backoff time by increasing the size of the backoff window. Specifically, if the data frame is not normally received at the AP, it is possible to reduce the collision occurrence probability by determining the subsequent backoff time as a larger value.

Specifically, according to an exemplary embodiment of the present invention, it is possible to reduce the collision probability using a CSMA/CA scheme. Even if the collision occurs, it is possible to successfully decode data frames that are simultaneously transmitted from more than one station using a MIMO decoding scheme. If using a scheme of adaptively adjusting the size of backoff window, it is possible to further reduce the collision probability for more frequent collision occurrences.

The data transmitting/receiving method according to the above-described exemplary embodiments may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD-ROM disks and DVD; magneto-optical media such as optical disks; and hardware devices that are specially configured to store and perform program instructions, such as read-only memory (ROM), random access memory (RAM), flash memory, and the like.

Examples of program instructions include both machine code, such as that produced by a compiler, and files containing higher level code that may be executed by the computer using an interpreter. The described hardware devices may be configured to act as one or more software modules in order to perform the operations of the above-described embodiments of the present invention.

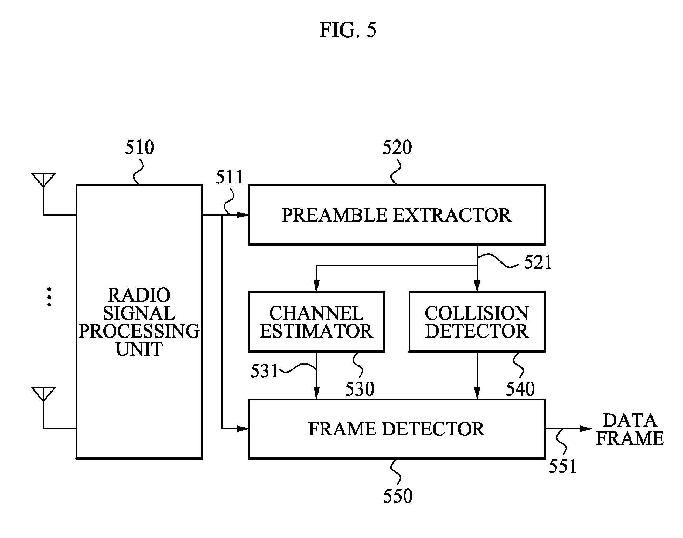

FIG. 5 is a block diagram illustrating an AP apparatus according to an exemplary embodiment of the present invention.

Referring to FIG. 5, the AP apparatus includes a radio signal processing unit 510 to receive data signals 511 from one or more stations. The data signals 511 may be transmitted from the one or more stations according to a DCF scheme.

The data signals 511 that are received by the radio signal processing unit 510 and are respectively associated with the stations are input into a preamble extractor 520. The preamble extractor 520 extracts from each data signal a preamble 521 corresponding to a station.

The extracted preambles 521 may be input into a channel estimator 530 and may be used to estimate a channel associated with the station associated with each extracted preamble 521. Also, the extracted preambles 521 may be input into a collision detector 540 and may be used to detect whether the collision occurs between two or more stations.

A channel estimate 531 is obtained by the channel estimator 530 based on the preamble 521, and is input into a frame detector 550. If the collision detector 540 detects a collision between stations, it sends a signal to the frame detector 550, which collectively or sequentially decodes the data signals 511 transmitted from the stations based on the input channel estimate 531, and detects a data frame 551 associated with each station.

The frame detector 550 may successfully decode data frames 551 that are respectively transmitted from the stations by applying a MIMO decoding scheme such as a ZF scheme, an MMSE scheme, or an ML scheme.

Also, the frame detector 550 may decode the data frames 551 using an SIC scheme.

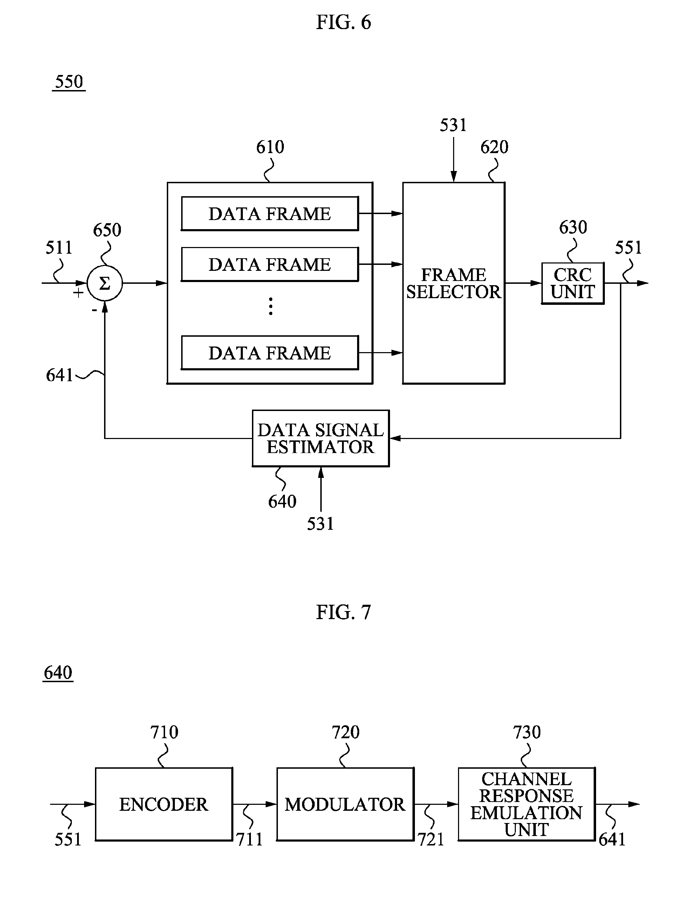

FIG. 6 is a block diagram illustrating a frame detector of the access point apparatus shown in FIG. 5. More specifically, FIG. 6 is a block diagram illustrating an internal configuration of the frame detector 550 adopting the SIC scheme.

A decoder 610 decodes data signals 511 and extracts data frames 551 respectively associated with the stations.

A frame selector 620 selects a channel with the best channel response from among the channels associated with the stations based on the channel estimate 531. The frame selector 620 selects a decoded data frame from a data signal 511 received via the selected channel, and outputs the selected data frame.

The selected data frame is input into a cyclic redundancy check (CRC) unit 630. If the CRC unit 630 does not detect any error, the data frame is output as the detected data frame 551 and is also input into a data signal estimator 640. The data signal estimator 640 applies to the selected data frame 551 a modulation and encoding scheme that is applied to the WLAN system and the channel estimate 531, and thereby estimates a data signal 641 corresponding to the selected data frame 551 to generate the estimated data signal 641.

An interference eliminator including a subtractor/summator 650 eliminates, one by one, the estimated data signal 641 from the data signals 511. Thus, sequential detection of a data frame 511 received via a channel with poor channel response is enabled from a data frame 551 received via the channel with better channel response.

FIG. 7 is a block diagram illustrating an internal configuration of a data signal estimator of the frame detector shown in FIG. 6. More specifically, FIG. 7 is a block diagram illustrating an internal configuration of the data signal estimator 640.

The data signal estimator 640 includes an encoder 710 that encodes the selected data frame 551 using the same scheme and level as that used in the WLAN system according to exemplary embodiments of the present invention.

A data frame 711 encoded again by the encoder 710 is input into a modulator 720. The modulator 720 generates a modulation signal 721 by applying to the encoded data frame 711 the same modulation scheme as used in the WLAN system.

A channel response emulation unit 730 emulates the channel estimate 531 in the modulation signal 721, and estimates and generates the data signal 641 that is received when the selected data frame 551 is transmitted and is received from any one of the plurality of stations via a wireless channel.

Through the above construction, even if the data frames are simultaneously transmitted from more than one station and a collision occurs between the data frames, the AP apparatus may successfully decode the data frames.

The configuration of the WLAN AP apparatus according to an exemplary embodiment of the present invention has been described above with reference to FIG. 5, FIG. 6, and FIG. 7. Detailed descriptions made according to exemplary embodiments with reference to FIG. 1, FIG. 2, FIG. 3, FIG. 4, and FIG. 5 may be applicable to the AP apparatus, and thus further detailed descriptions will be omitted here.

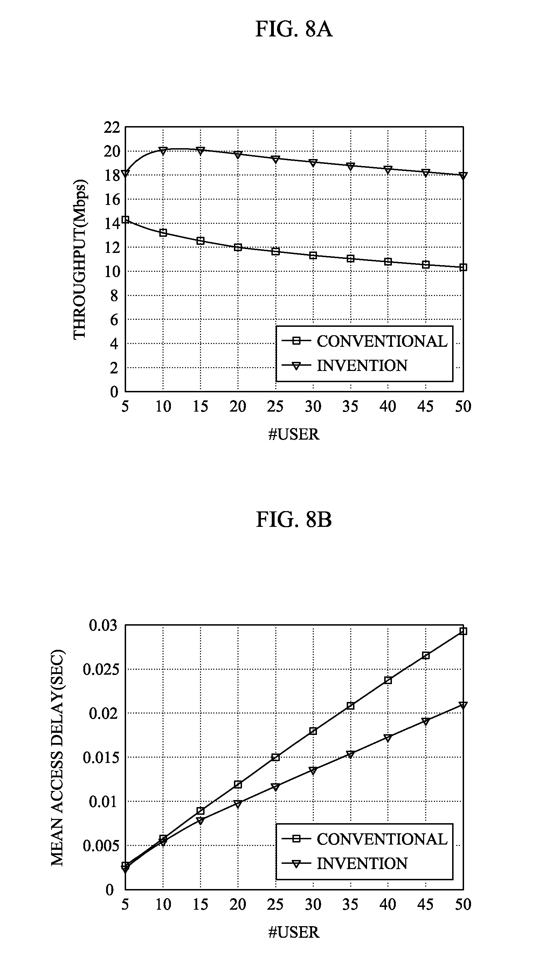

FIG. 8A, FIG. 8B, FIG. 9A, FIG. 9B, FIG. 10A, and FIG. 10B show performance measurement results obtained from a simulation test by a data transmitting/receiving method according to an exemplary embodiment of the present invention. The simulation test was performed based on that data is transmitted at a speed of 24 Mbps in a basic mode of an IEEE 802.11a DCF scheme. FIG. 8A, FIG. 8B, FIG. 9A, FIG. 9B, FIG. 10A, and FIG. 10B are graphs illustrating a measurement value of data transmission throughput when changing a number of users in different error environments.

FIG. 8A and FIG. 8B are graphs illustrating the simulation test result when no error occurs. In the graph shown in FIG. 8A, the data transmission throughput in a MAC protocol of a conventional DCF scheme is compared with the data transmission throughput in a MAC protocol using a MIMO decoding scheme according to an exemplary embodiment of the present invention. As shown in FIG. 8A, the data transmitting/receiving method according to a MIMO decoding scheme according to an exemplary embodiment of the present invention may significantly improve the data transmission throughput. It can be seen that the level of the improvement increases as a number of users, that is, a number of stations accessing the AP increases. Referring to the graph, when the number of users was 50, the throughput was improved by about 8 Mpbs.

FIG. 8B is a mean access delay time graph that is computed based on a second unit. It can be seen that the difference of the mean access delay time increases in a nearly linear fashion as the number of users increases. Referring to the graph, when the number of users was 50, the mean access delay time was reduced by about 0.01 seconds.

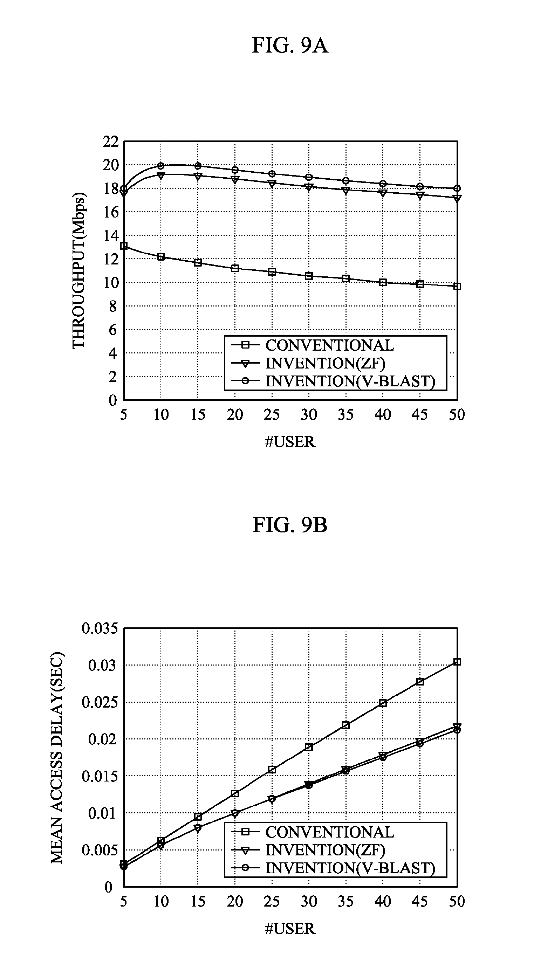

FIG. 9A and FIG. 9B are graphs illustrating the simulation test result about the throughput and mean access delay time when an error continuously exists.

The graph shown in FIG. 9A is similar to the graph of FIG. 8A. Referring to FIG. 9A, the performance when using a MIMO decoding scheme of a Vertical Bell Laboratories Layered Space-Time (V-BLAST) scheme is slightly better than the performance when using a ZF scheme. However, in comparison to the conventional scheme without adopting the MIMO decoding scheme, it can be seen that the throughput was significantly improved when using the V-BLAST scheme and when using the ZF scheme. Referring to the graph, when the number of users was 50, the throughput was improved by about 8 Mbps in both tests.

A decreasing pattern of the mean access delay time shown in the graph of FIG. 9B is nearly the same as the pattern of the graph shown in FIG. 8B. Even in this case, when using the V-BLAST, the performance was improved slightly more than when using the ZF scheme. However, in comparison to the conventional scheme, it can be seen that the mean access delay time was significantly decreased when using the V-BLAST scheme and when using the ZF scheme. Referring to the graph, when the number of users was 50, about 0.01 seconds of mean access delay time was reduced in both tests.

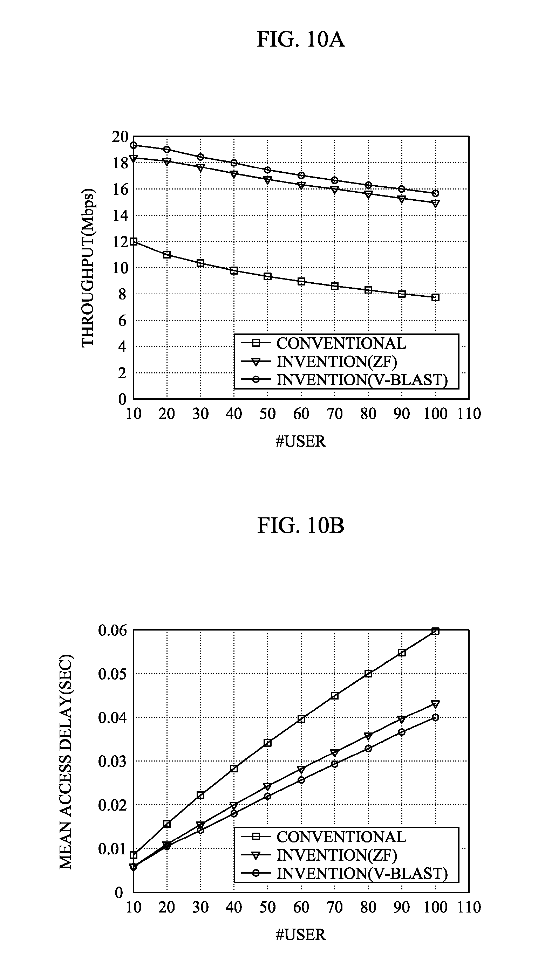

FIG. 10A and FIG. 10B are graphs illustrating the simulation test result when an error rate changes. In the graph shown in FIG. 10A, the throughput when using the ZF scheme or the V-BLAST scheme is compared with the throughput when using the conventional scheme. Referring to FIG. 10A, although the throughput is decreasing as the number of users increases, the throughput improvement with respect to the conventional scheme is maintained to be nearly constant. Specifically, when applying the ZF scheme or the V-BLAST scheme based on 100 users, the throughput was improved by about 7.5 Mbps in comparison to the conventional data transmitting/receiving method.

Also, like the graphs shown in FIG. 8B and FIG. 9B, the graph shown in FIG. 10B shows that the deterioration of the mean access delay time increases in a nearly linear fashion as the number of users increases. When adopting the ZF scheme or the V-BLAST scheme based on 100 users, the mean access delay time is decreased by about 0.02 seconds in comparison to the conventional scheme.

A method for transmitting/receiving data according to exemplary embodiments of the present invention can apply a MIMO technology to a physical layer and a MAC layer and thereby support a MAC protocol that effectively supports an improved data transmission rate in the physical layer.

Also, according to exemplary embodiment of the present invention, if a collision occurs between stations, data from each station is decoded using a MIMO decoding scheme. Accordingly, it is possible to prevent the deterioration of the data transmission throughput in the entire WLAN system, which may occur due to the frame retransmission. Also, it is possible to reduce a network access delay caused by the throughput deterioration.

Also, according to exemplary embodiments of the present invention, it is possible to detect a collision between a plurality of stations using a preamble consisting of an orthogonal code or a PN code. Also, it is possible to provide various types of schemes for allocating a preamble corresponding to each station.

Also, according to exemplary embodiments of the present invention, it is possible to provide a station side with more accurate information regarding a failure cause of data reception by including information associated with a collision in an ACK.

Also, according to exemplary embodiments of the present invention, if an ACK is not received from an AP within a predetermined period of time, it is possible to increase the size of a backoff window and thereby reduce the collision probability for a subsequent frame transmission.

Also, according to exemplary embodiments of the present invention, it is possible to provide a construction of an AP apparatus that includes a function of decoding data simultaneously transmitted from a plurality of stations, using various types of MIMO decoding technologies.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A method for receiving data transmitted from a first station to an access point in a multiple-input multiple-output (MIMO) wireless local area network (WLAN) environment, the method comprising:

   receiving a first preamble from the first station via a plurality of receiving antennas;
   measuring a channel coefficient between the first station and the access point based on the first preamble;
   detecting a collision between the first station corresponding to the first preamble and a second station corresponding to a second preamble; and
   constructing a channel vector using the channel coefficient if the collision is detected, and decoding data transmitted from the first station and the second station using the channel vector.

2. The method of claim 1, wherein the first preamble comprises a first preamble code that the first station randomly selects from a plurality of preamble codes included in a preamble code pool.

3. The method of claim 1 or 2, wherein the WLAN uses a Media Access Control (MAC) protocol of a Distributed Coordinate Function (DCF) scheme.

4. The method of any one of claims 1 to 3, wherein the data is decoded based on at least one of a zero-forcing (ZF) scheme, a minimum mean-square error (MMSE) scheme, and a maximum likelihood (ML) scheme.

5. The method of any one of claims 1 to 3, wherein the data is decoded using a Successive Interference Cancellation (SIC) scheme.

6. The method of any one of claims 2 to 5, wherein the preamble code pool is maintained by the access point and each of the stations is allocated with a independent preamble.

7. The method of any one of claims 1 to 6, wherein the first preamble is allocated by the access point when the first station performs association on the access point.

8. The method of any one of claims 2 to 7, wherein receiving the first preamble comprises:

   receiving a radio signal transmitted from the first station;
   correlating the radio signal with a predetermined preamble code to calculate a correlation value; and

extracting, as the first preamble, a preamble code used for the correlating if the correlation value is greater than a predetermined value.

9. The method of any one of claims 1 to 8, wherein the channel coefficient is measured based on a pilot signal transmitted from the first station.

10. The method of any one of claims 1 to 9, further comprising:

decoding data transmitted from the first station associated with the first preamble if the collision is undetected.

11. The method of claim 10, further comprising:

transmitting an acknowledgement signal to the first station associated with the first preamble if decoding the data is successful.

12. The method of claim 11, wherein the acknowledgement signal comprises information indicating whether the collision is detected.

13. The method of any one of claims 1 to 12, wherein the first station comprises a single antenna.

14. The method of any one of claims 1 to 13, further comprising:

transmitting an acknowledgement signal to the first station and the second station if decoding the data is successful.

15. The method of claim 14, wherein the acknowledgement signal comprises a first identifier associated with the first station and a second identifier associated with the second station.

16. The method of claim 15, wherein the first identifier comprises a preamble index corresponding to the first station.

17. The method of any one of claims 14 to 16, wherein the acknowledgement signal comprises information indicating whether the collision is detected.

18. A method for transmitting data from a first station to an access point in a multiple-input multiple-output (MIMO) wireless local area network (WLAN) system, the method comprising:

monitoring a system carrier to detect a data transmission state of the system;
waiting for data transmission during a backoff time if data transmission from a second station to the access point is detected; and
transmitting a data frame to the access point via a plurality of transmitting antennas, the data frame comprising a preamble associated with the first station, and the preamble comprising an orthogonal code or a pseudo-noise code,
wherein the monitoring, receiving, and transmitting are repeated if an acknowledge signal is not received from the access point within a predetermined period of time.

19. The method of claim 18, further comprising at least one of:

randomly selecting the preamble from a plurality of preamble codes included in a preamble code pool; and
receiving an allocation of the preamble from the access point at a time when the first station performs association on the access point.

20. The method of claim 18 or 19, wherein the transmitting of the data frame is performed if the data transmission from the second station is undetected, or if the backoff time has elapsed.

21. The method of any one of claims 18 to 20, wherein the backoff time is randomly selected within a size of a window range.

22. The method of claim 21, further comprising:

increasing the size of the window if the acknowledgement signal is not received from the access point within the predetermined period of time.

23. A multiple-input multiple-output (MIMO) wireless local area network (WLAN) system, comprising:

an access point comprising a plurality of receiving antennas;
a first station comprising a plurality of transmitting antennas, the first station to transmit data to the access point; and
a second station comprising a plurality of transmitting antennas, the second station to transmit data to the access point,
wherein, if data transmission from the second station is detected using a system carrier, the first station is in a standby state during a first backoff time after a short interframe Space (SIFS), an acknowledgement (ACK), a Distributed Coordinate Function (DCF) interframe space (DIFS), or an extended interframe space (EISF) time has elapsed, and thereafter the first station transmits a first data frame that includes a first preamble associated with the first station, and
if a collision is detected via the first preamble and a second preamble respectively received from the first station and the second station, the access point decodes the first data frame and a second data frame using a channel coefficient, wherein the first data frame and the second data frame are transmitted from the first station and the second station, and the channel coefficient is measured based on the first preamble and the second preamble.

24. The system of claim 23, wherein the access point decodes the first data frame and the second data frame using at least one of a zero-forcing (ZF) scheme, a minimum mean-square error (MMSE) scheme, a maximum likelihood (ML) scheme, and a Successive Interference Cancellation (SIC) scheme.

25. The system of claim 23 or 24, wherein the access point transmits an acknowledgement signal to the first station that transmits the first data frame if the decoding of the first data frame succeeds.

26. The system of claim 25, wherein the first station retransmits the first data frame after a second backoff time has elapsed if the acknowledge signal is not received from the access point within a predetermined period of time after transmitting the first data frame.

27. An access point apparatus for a multiple-input multiple-output (MIMO) wireless local area network (WLAN) system, the access point apparatus comprising:

a radio signal processing unit to receive a first data signal from a first station;
a preamble extractor to extract a first preamble from the first data signal, the first preamble corresponding to the first station;
a channel estimator to estimate a channel associated with the first station based on the first preamble, and to obtain a channel estimate;
a collision detector to detect a collision between the first station and a second station based on the first preamble and a second preamble in a second data signal from the second station; and
a frame detector to collectively or sequentially decode the first data signal based on the obtained channel estimate if the collision is detected, and to detect a first data frame of the first station.

28. The access point apparatus of claim 27, wherein the frame detector comprises:

a decoder to decode the first data signal and to extract a plurality of data frames corresponding to a plurality of channels, the plurality of data frames comprising the first data frame;
a frame selector to select the first data frame based on the channel estimate;
a data signal estimator to estimate an estimated data signal associated with the first data frame using the channel estimate; and
an interference eliminator to eliminate the estimated data signal from the first data signal.

29. The access point apparatus of claim 28, wherein the frame selector selects the first data frame corresponding to the first data signal in which the estimated data signal is eliminated.

30. The access point apparatus of any one of claims 27 to 29, wherein the frame detector further comprises:

a cyclic redundancy check (CRC) unit to perform a CRC for the first data frame,
wherein the data signal estimator generates the estimated data signal with respect to a data frame error undetected by the CRC unit.

31. The access point apparatus of any one of claims 28 to 30, wherein the data signal estimator comprises:

an encoder to encode the first data frame using a scheme applicable to the WLAN system;
a modulator to modulate the encoded first data frame using a modulation scheme applicable to the WLAN system and to generate a modulated signal; and
a channel response emulation unit to emulate the channel estimate in the modulated signal and to generate the estimated data signal.

32. The access point apparatus of any one of claims 27 to 31, wherein the frame detector detects the plurality of data frames using at least one of a zero-forcing (ZF) scheme, a minimum mean-square error (MMSE) scheme, a maximum likelihood (ML) scheme, and a Successive Interference Cancellation (SIC) scheme.

33. The access point apparatus of any one of claims 27 to 32, wherein the data signal is transmitted from the first station using a Distributed Coordinate Function (DCF) scheme.

34. A computer-readable recording medium to store a program for implementing the method of any one of claims 1 to 22.

FIG. 1

FIG. 2

FIG. 3

```
                        ┌─────────────┐
                        │    START    │
                        └─────────────┘
                               │
                               ▼
              ┌──────────────────────────────┐
              │       RECEIVE PREAMBLE        │──── S310
              └──────────────────────────────┘
                               │
                               ▼
              ┌──────────────────────────────┐
              │   ESTIMATE WIRELESS CHANNEL   │──── S320
              └──────────────────────────────┘
                               │
                               ▼
              ┌──────────────────────────────┐
              │       DETECT COLLISION        │──── S330
              └──────────────────────────────┘
                               │
    S350                       ▼
           NO      ◇───────────────────────◇
      ◄─────────── ◇       COLLISION?       ◇──── S335
      │            ◇───────────────────────◇
      │                        │ YES
      ▼                        ▼
┌──────────────┐  ┌──────────────────────────────┐
│    SINGLE    │  │     APPLY MIMO DECODING       │──── S340
│   DECODING   │  │           SCHEME              │
└──────────────┘  └──────────────────────────────┘
      │                        │
      └───────────────────────►│
    S361                       ▼
           NO      ◇───────────────────────◇
      ◄─────────── ◇      DOES DECODING      ◇──── S345
      │            ◇         SUCCEED?        ◇
      │            ◇───────────────────────◇
      ▼                        │ YES
┌──────────────┐               ▼
│WAIT FOR ACK  │  ┌──────────────────────────────┐
│WAITING TIME  │  │   TRANSMIT ACK TO STATION     │──── S360
│OR TRANSMIT   │  └──────────────────────────────┘
│NACK TO       │               │
│STATION       │               │
└──────────────┘               │
      │                        ▼
      └──────────────► ┌─────────────┐
                       │     END     │
                       └─────────────┘
```

## FIG. 4

START

DETECT DATA TRANSMISSION STATE — S410

IS DATA BEING TRANSMITTED FROM ANOTHER STATION? — S415

NO

YES

WAIT FOR DATA TRANSMISSION UNTIL BACKOFF TIME IS ELAPSED AFTER DATA TRANSMISSION OF OTHER STATION IS COMPLETED — S420

TRANSMIT DATA FRAME TO AP — S430

BE IN STANDBY STATE TO RECEIVE ACK DURING ACK WAITING TIME — S440

S445

IS ACK RECEIVED?

NO

YES

END

FIG. 5

## FIG. 6

## FIG. 7

## FIG. 8A

## FIG. 8B

FIG. 9A

FIG. 9B

## FIG. 10A

## FIG. 10B

Europäisches
Patentamt

European
Patent Office

Office européen
des brevets

# EUROPEAN SEARCH REPORT

**Application Number**

EP 08 15 3091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HANS-JURGEN REUMERMAN ET AL: "A MAC Protocol for MIMO Based IEEE 802.11 Wireless Local Area Networks" WIRELESS COMMUNICATIONS AND NETWORKING CONFERENCE, 2007.WCNC 2007. IEE E, IEEE, PI, 1 March 2007 (2007-03-01), pages 2131-2136, XP031088884 ISBN: 978-1-4244-0658-6 * the whole document * | 1-34 | INV. H04L25/03 |
| X | BRUNO BOUGARD ET AL: "SmartMIMO: Energy-Aware Adaptive MIMO-OFDM Radio Link Control for Wireless Local Area Networks" SIGNAL PROCESSING SYSTEMS DESIGN AND IMPLEMENTATION, 2006. SIPS ' 06. IEEE WORKSHOP ON, IEEE, PI, 1 October 2006 (2006-10-01), pages 399-404, XP031080576 ISBN: 978-1-4244-0382-0 paragraph III. MIMO Physical and MAC layers; figures III-1, III-2 | 1-34 | |
| X | KUZMINSKIY A M ET AL: "Cross-Layer Design of Uplink Multiple-Antenna Interference Cancellation for WLAN with CSMA/CA in Open Access Networks" COMMUNICATIONS, 2007. ICC '07. IEEE INTERNATIONAL CONFERENCE ON, IEEE, PI, 1 June 2007 (2007-06-01), pages 2568-2573, XP031126058 ISBN: 978-1-4244-0353-0 paragraphs II-IV | 1-34 | TECHNICAL FIELDS SEARCHED (IPC) H04L H04B |
| A | US 2006/182079 A1 (YANG CHIL-YOUL [KR] ET AL) 17 August 2006 (2006-08-17) * paragraphs [0009] - [0025], [0047] * * figures 1-4 * | 1-34 | |

-/--

The present search report has been drawn up for all claims

| Place of search | Date of completion of the search | Examiner |
|---|---|---|
| Munich | 27 November 2008 | Ferrari, Jeannot |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 08 15 3091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/159003 A1 (NANDA SANJIV [US] ET AL) 20 July 2006 (2006-07-20)<br>* paragraphs [0040], [0051] - [0062] *<br>* figures 1,6 * | 1-34 | |
| A | EP 1 594 259 A (INFINEON TECHNOLOGIES AG [DE]) 9 November 2005 (2005-11-09)<br>* paragraphs [0014] - [0016], [0019], [0051] *<br>* figure 1 * | 1-34 | |
| A | ROBERTO RIGGIO ET AL: "Performance of a Novel Adaptive Traffic Aggregation Scheme for Wireless Mesh Networks"<br>MILITARY COMMUNICATIONS CONFERENCE, 2007. MILCOM 2007. IEEE, IEEE, PISCATAWAY, NJ, USA, 29 October 2007 (2007-10-29), pages 1-7, XP031232628<br>ISBN: 978-1-4244-1512-0<br>paragraph III.Transmission overhead in WIFI networks | 1-34 | |
| A | SKORDOULIS D ET AL: "IEEE 802.11n MAC frame aggregation mechanisms for next-generation high-throughput WLANs [medium access control protocols for wireless LANs]"<br>IEEE WIRELESS COMMUNICATIONS, IEEE SERVICE CENTER, PISCATAWAY, NJ, US,<br>vol. 14, no. 1,<br>1 February 2008 (2008-02-01), pages 40-47, XP011204551<br>ISSN: 1536-1284<br>* the whole document * | 1-34 | TECHNICAL FIELDS SEARCHED (IPC) |

-/--

The present search report has been drawn up for all claims

| Place of search | Date of completion of the search | Examiner |
|---|---|---|
| Munich | 27 November 2008 | Ferrari, Jeannot |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 2 104 292 A1

**EUROPEAN SEARCH REPORT**

Application Number

EP 08 15 3091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/196871 A1 (TERRY JOHN [US]) 7 October 2004 (2004-10-07) * paragraphs [0006] - [0011], [0054], [0068] * * figure 1B * | 1-34 | |

TECHNICAL FIELDS SEARCHED (IPC)

The present search report has been drawn up for all claims

| Place of search | Date of completion of the search | Examiner |
|---|---|---|
| Munich | 27 November 2008 | Ferrari, Jeannot |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 15 3091

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2008

| Patent document cited in search report | | Publication date | Patent family member(s) | | Publication date |
|---|---|---|---|---|---|
| US 2006182079 | A1 | 17-08-2006 | US | 2006182080 A1 | 17-08-2006 |
| US 2006159003 | A1 | 20-07-2006 | NONE | | |
| EP 1594259 | A | 09-11-2005 | CN | 1694458 A | 09-11-2005 |
| | | | US | 2005259686 A1 | 24-11-2005 |
| US 2004196871 | A1 | 07-10-2004 | EP | 1614308 A2 | 11-01-2006 |
| | | | WO | 2004088897 A2 | 14-10-2004 |
| | | | KR | 20050122235 A | 28-12-2005 |
| | | | TW | 248770 B | 01-02-2006 |
| | | | US | 2005147075 A1 | 07-07-2005 |

EPO FORM P0459

For more details about this annex : see Official Journal of the European Patent Office, No. 12/82

**EP 2 104 292 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 694243 A